# FASCICULE DE BREVET EUROPEEN

(11) **EP 0 818 261 B1**
(45) Date de publication et mention de la délivrance du brevet: **04.12.2002**
(21) Numéro de dépôt: 97420107.1
(22) Date de dépôt: 03.07.1997
(51) Int. Cl.: B23B 27/14

(54) **Couteau d'écorçage, et procédé pour sa réalisation**
Entschalmesser und seiner Herstellungsmethode
Peeling knife and method of manufacture

(30) Priorité: 12.07.1996 FR 9609059
(43) Date de publication de la demande: 14.01.1998
(73) Titulaire: TECHNOGENIA S.A., 74410 Saint-Jorioz (FR)
(72) Inventeur: Maybon, Guy, 74410 Saint Jorioz (FR)
(74) Mandataire: Poncet, Jean-François

(56) Documents cités:
- EP-A- 0 319 926
- CA-A- 2 078 355
- DE-A- 3 437 983
- DE-A- 3 808 285
- DE-A- 4 134 144
- US-A- 4 200 669
- PATENT ABSTRACTS OF JAPAN vol. 13, no. 275 (C-610), 23 Juin 1989 & JP 01 073063 A (BABCOCK HITACHI), 17 Mars 1989,

## Description

La présente invention concerne un couteau d'écorçage utilisés pour l'écorçage des troncs d'arbre selon le preambule de la revendication 1 et comme connu du document CA-A-2 078 355. L'invention concerne en outre un procédé de fabrication d'un couteau d'écorçage selon les revendications 1 à 7.

L'écorçage industriel des troncs d'arbre est effectué par des machines telles que décrites par exemple dans le document CA 2 078 355 A, comportant des moyens supports de troncs d'arbre pour porter un tronc d'arbre couché et le déplacer en translation longitudinale en le faisant tourner autour de son axe longitudinal. Des couteaux d'écorçage, comportant au moins une arête d'écorçage à profil à angle droit, sont tenus latéralement en appui contre la face latérale du tronc d'arbre, en position longitudinale fixe, et selon une orientation appropriée, pour gratter l'écorce du tronc par l'arête d'écorçage.

De telles machines nécessitent une surveillance constante, notamment à cause de l'usure de l'arête d'écorçage des couteaux.

Cette usure émousse progressivement l'arête d'écorçage, et réduit son efficacité. Il en résulte que l'enlèvement de l'écorce est incomplet, réduisant ainsi la qualité du bois pour son usage ultérieur tel que la fabrication de la pâte à papier.

Il est ainsi nécessaire de changer les couteaux régulièrement, pour renouveler les arêtes d'écorçage de la machine.

Pour augmenter la durée de vie de certains outils d'usinage des métaux, on a utilisé des plaques en un matériau à plus grande dureté, ou des plaques ayant reçu un traitement de surface par dépôt chimique en phase vapeur (C.V.D) tel que décrit dans le document EP 0 319 926 A, par dépôt en phase vapeur sous pression (P.V.D), par nitruration sous laser comme décrit dans le document DE 38 08 285 A, par nitruration ionique, par revêtement dur métallisé par plasma soufflé, ou par oxydation à grande vitesse (H.V.O.F). Toutefois ces techniques n'ont pas été appliquées à des couteaux pour écorçage des troncs d'arbre, et elles ne sont pas directement applicables à la géométrie particulière de couteaux d'écorçage à arête aigüe.

Le problème proposé par la présente invention est de concevoir une nouvelle structure de couteau d'écorçage, et un procédé pour sa fabrication, permettant d'augmenter très sensiblement la résistance à l'usure des arêtes d'écorçage, et conservant les qualités coupantes nécessaires à un fonctionnement optimal de la machine d'écorçage.

L'idée qui est à la base de l'invention consiste a prévoir une geométrie et une structure composite de couteau d'écorçage, qui, lors de l'utilisation, présente une usure progressive conservant sensiblement la géométrie appropriée de l'arête d'écorçage, tout en réduisant la rapidité d'usure de l'arête d'écorçage.

Pour atteindre ces objets ainsi que d'autres, un couteau d'écorçage selon l'invention comprend au moins une arête aiguë d'écorçage limitée par une face d'attaque et une face de fuite, avec une plaque de substrat dont une face forme la face de fuite, la face d'attaque étant renforcée par un rechargement antiabrasion présentant des qualités antiabrasion supérieures à celles du matériau formant la plaque de substrat. Grâce à cette structure composite, avec face d'attaque plus résistante à l'abrasion, il se produit un phénomène d'autoaffûtage qui conserve à l'arête d'écorçage sa géométrie nécessaire à une efficacité d'écorçage satisfaisante. Le phénomène d'autoaffûtage s'explique par la différence de résistance à l'usure du matériau formant la plaque de substrat et du rechargement en matériau antiabrasion. La face d'attaque est en effet beaucoup plus sollicitée que le substrat. Alors que, dans le cas d'un couteau d'écorçage homogène, l'usure produit l'arrondissement de l'arête de coupe, dans le cas d'un couteau selon l'invention, la différence de résistance des matériaux permet de conserver la géométrie de l'arête. Le substrat, bien que moins sollicité, s'use par frottement sensiblement à la même vitesse que le fil de l'arête constitué par le matériau plus résistant à l'abrasion. Le profil de coupe du couteau se trouve ainsi conservé, ce qui contribue à assurer une bonne qualité d'écorçage. Le profil aigu de l'arête d'écorçage accentue le phénomène d'autoaffûtage avec conservation du profil de coupe.

De préférence, le rechargement antiabrasion présente une épaisseur régulière comprise entre 0,2 et 1 mm environ.

Le rechargement antiabrasion peut avantageusement comprendre un mélange de grains de carbure de tungstène fondu liés par un alliage métallique.

Les grains de carbure de tungstène fondu ont de préférence une granulométrie comprise entre 40 et 160 microns.

L'alliage métallique peut avantageusement être un alliage Ni/Cr/B/Si, de dureté comprise entre 40 HRC et 60 HRC.

Un procédé avantageux pour la réalisation d'un tel couteau d'écorçage comprend une étape de rechargement de la face d'attaque au moyen d'un dispositif comportant une buse de projection de poudre à faisceau laser coaxial central, dirigeant une poudre de matériau de rechargement et le faisceau laser sur une zone d'impact de la plaque de substrat, et déplaçant progressivement la zone d'impact pour couvrir la zone d'arête d'écorçage à recharger, le faisceau laser ayant une intensité appropriée pour fondre en partie le matériau de rechargement et assurer son adhésion sur la plaque de substrat.

D'autres objets, caractéristiques et avantages de la présente invention ressortiront de la description suivante de modes de réalisation particuliers, faite en relation avec les figures jointes, parmi lesquelles:
- la figure 1 illustre schématiquement, en vue en bout, les éléments essentiels d'une machine d'écorçage ;
- la figure 2 est une vue de face d'un couteau d'écorçage selon un mode de réalisation de la présente invention ;
- la figure 3 est une coupe selon le plan A-A de la figure 2 ;
- la figure 4 illustre l'usure progressive d'un couteau d'écorçage homogène classique ;
- la figure 5 illustre l'usure progressive d'un couteau d'écorçage selon la présente invention ; et
- la figure 6 est une vue schématique en perspective d'un dispositif pour la fabrication des couteaux d'écorçage selon la présente invention.

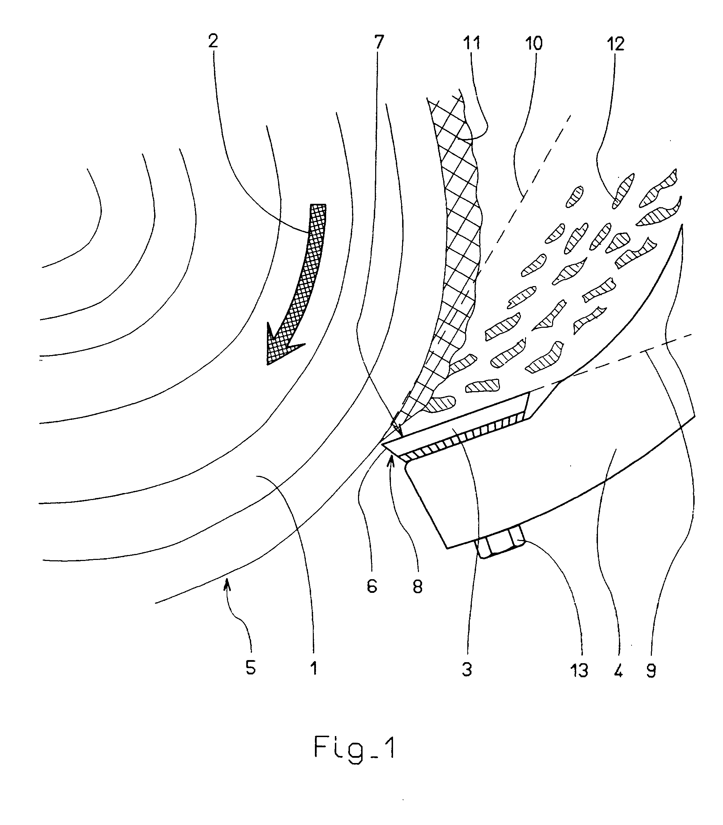

Comme illustré sur la figure 1, une machine d'écorçage comprend généralement des moyens supports de troncs d'arbre, non représentés, permettant de porter un tronc d'arbre 1 couché, de le déplacer en translation longitudinalement le long de son axe longitudinal, en le faisant tourner autour de son axe longitudinal comme illustré par la flèche 2. Un couteau d'écorçage 3, porté par un support 4, est tenu en appui contre la surface latérale 5 du tronc 1. Le couteau d'écorçage 3 comprend au moins une arête d'écorçage 6 limitée par une face d'attaque 7 et une face de fuite 8. Le couteau 3 est disposé de telle sorte que l'arête d'écorçage 6 est sensiblement parallèle à l'axe longitudinal du tronc d'arbre 1 et en appui radial contre la face latérale 5 du tronc d'arbre, selon une orientation appropriée telle que sa face d'attaque 7 est disposée selon un plan 9 faisant un angle aigu, par exemple d'environ 45 degrés avec la tangente 10 à la surface latérale 5 du tronc 1 qui est orientée vers l'amont de la zone d'écorçage. Ainsi, l'écorce 11 vient buter contre la face d'attaque 7 du couteau d'écorçage 3, et se trouve détachée de la surface 5 du tronc d'arbre pour se disperser en copeaux 12, comme illustré sur la figure.

Le couteau 3 est fixé sur le support 4 par tous moyens appropriés tels qu'une vis 13 engagée dans un trou du couteau d'écorçage 3.

Le support 4 est prévu pour maintenir le couteau d'écorçage 3 en appui radial élastique contre la surface latérale 5 du tronc d'arbre 1, en suivant la forme généralement irrégulière de cette surface latérale 5.

Le double mouvement de rotation axiale 2 et de translation axiale du tronc d'arbre 1 est adapté de façon que le couteau d'écorçage 3 se déplace en hélice le long de la totalité de la surface latérale 5 du tronc d'arbre 1, pour enlever la totalité de l'écorce 11.

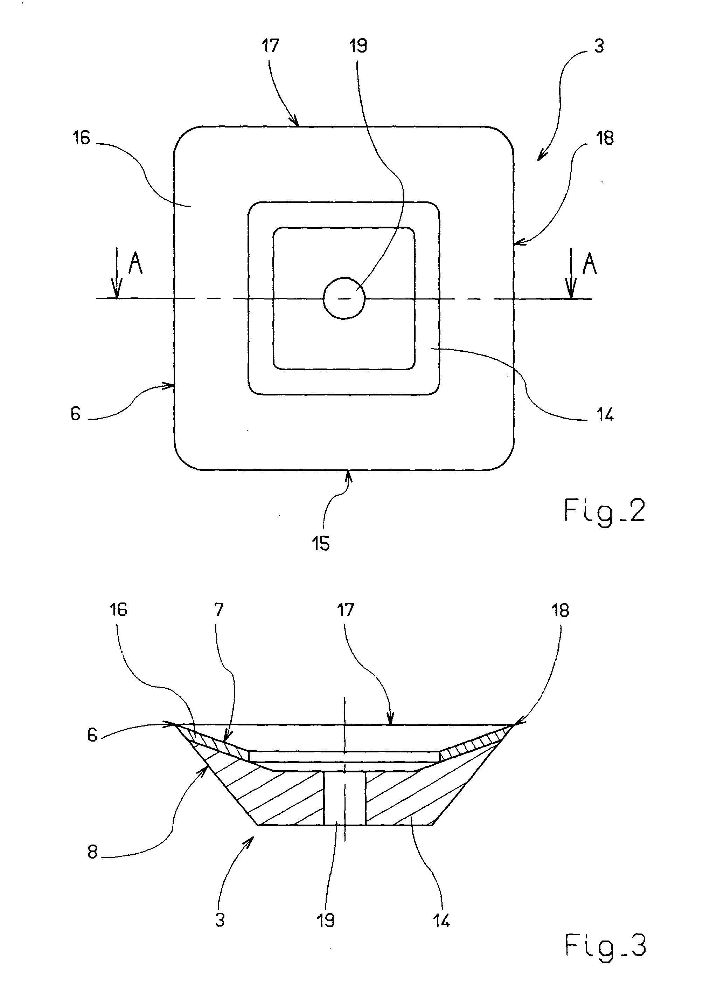

Dans le mode de réalisation illustré sur les figures 2 et 3, le couteau d'écorçage 3 est formé d'une plaque de substrat 14, par exemple en acier, formant la structure de base du couteau d'écorçage. La plaque de substrat 14 peut avantageusement être limitée par une pluralité d'arêtes d'écorçage formant un contour polygonal, par exemple par trois ou quatre arêtes d'écorçage. Sur la réalisation représentée sur la figure, la plaque de substrat 14 est limitée par quatre arêtes d'écorçage respectivement 15, 6, 17 et 18, formant avantageusement un contour carré. La partie centrale de la plaque de substrat 14 est munie du trou 19 permettant la fixation du couteau d'écorçage 3 au support 4 comme mentionné précédemment.

Dans le mode de réalisation illustré sur ces mêmes figures 2 et 3, le contour de la plaque de substrat 14 est relevé en direction de la face d'attaque 7, pour former une plaque de substrat 14 à face amont concave, favorisant le guidage et l'évacuation des copeaux 12.

Comme on le voit sur les figures, une face de la plaque de substrat 14 forme la face de fuite 8, tandis que la face d'attaque 7 est renforcée par un rechargement antiabrasion 16 présentant des qualités antiabrasion supérieures à celles du matériau tel que l'acier formant la plaque de substrat 14. Le rechargement antiabrasion présente une épaisseur régulière, pouvant avantageusement être comprise entre 0,2 et 1 mm environ.

De bons résultats sont obtenus en utilisant, comme rechargement antiabrasion d'une plaque de substrat 14 en acier, un mélange de grains de carbure de tungstène fondu liés par un alliage métallique tel qu'un alliage Ni/Cr/B/Si.

On a pu constater des augmentations de durée de fonctionnement dans un rapport de 1 à 4 avec la composition suivante :

| | |
|---|---|
| alliage Ni/Cr/B/Si de dureté 40 HRC | 50% |
| carbure de tungstène fondu en poudre 160 à 40 Microns | 50% |

Cette composition permet l'obtention d'un assemblage très compact de grains de carbure de tungstène fondu, donnant ainsi à ce revêtement une résistance à l'usure exceptionnelle.

A l'augmentation de la résistance à l'usure s'ajoute un phénomène d'autoaffûtage de l'arête d'écorçage, qui permet de conserver une efficacité satisfaisante même après usure sensible du couteau.

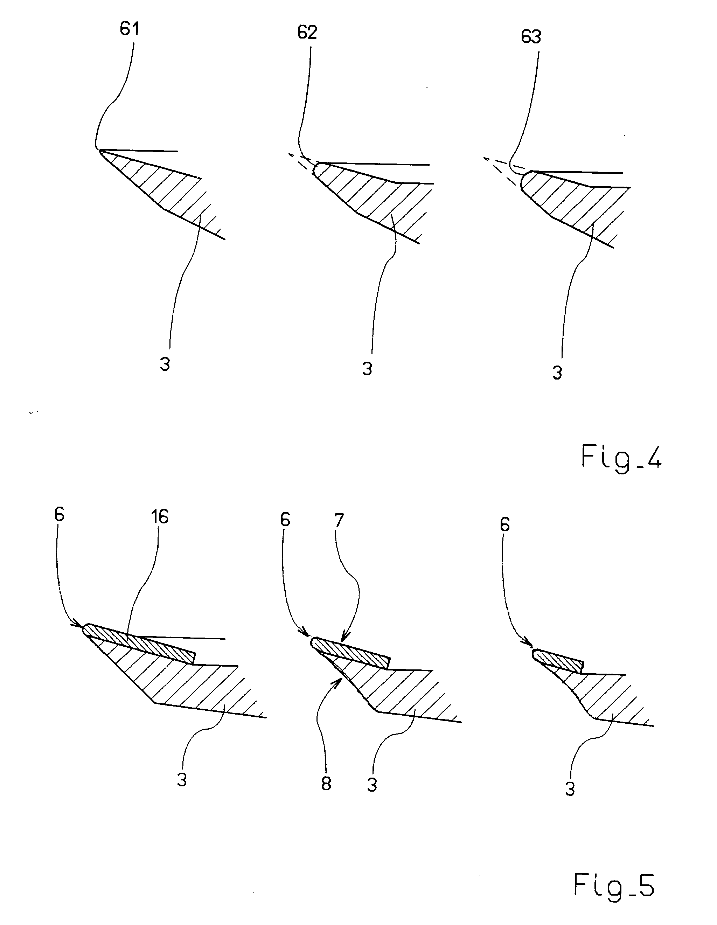

Ce phénomène d'autoaffûtage est expliqué en relation avec les figures 4 et 5. Sur la figure 4, un couteau d'écorçage classique présente initialement une arête de coupe 61 aiguë. Progressivement, l'arête de coupe devient plus arrondie comme indiqué par la référence 62, puis devient très ronde comme indiqué par la référence 63. On comprend que l'arête ronde 63 devient impropre à un écorçage efficace, l'écorce tendant à glisser sur l'arrondi de l'arête 63.

Sur la figure 5, un couteau d'écorçage 3 selon l'invention présente l'arête d'écorçage 6 avec le rechargement antiabrasion 16. Au fil du temps, la face de fuite 8 qui est en un matériau plus tendre formant le substrat, tend à s'user plus facilement que la face d'attaque 7 en matériau antiabrasion, de sorte que la face de fuite 8 reste en permanence en retrait par rapport à la face d'attaque 7, conservant une géométrie acérée de l'arête d'écorçage 6, même après une longue période d'utilisation donnant lieu à une usure non négligeable du couteau.

Il en résulte que le couteau 3 peut être utilisé pendant une durée beaucoup plus longue, étant observé que l'usure du couteau est compensée par le déplacement du support 4 vers le tronc d'arbre 1 pendant l'utilisation.

Pour la fabrication d'un tel couteau d'écorçage 3, la technique de rechargement dur à l'aide d'une flamme chimique n'est pas utilisable de manière industrielle. En effet, la flamme est relativement étendue par rapport à la zone rechargée, et ne permet pas de localiser l'apport de matière de rechargement avec précision. Cette technique ne permet pas, non plus, la réalisation d'un dépôt régulier en épaisseur, nécessaire pour obtenir une bonne coupe. La quantité d'alliage perdue dans une opération à la flamme rend celle-ci économiquement peu rentable. Des essais ont montré un rapport de 1 à 10 entre le poids de mélange effectivement déposé et le poids de mélange utilisé pour le dépôt. Il en résulte une perte non négligeable de carbure de tungstène.

Selon l'invention, la fabrication d'un couteau d'écorçage comprend une étape de rechargement de la face d'attaque 7 au moyen d'un dispositif comportant une buse de projection de poudre à faisceau laser coaxial central.

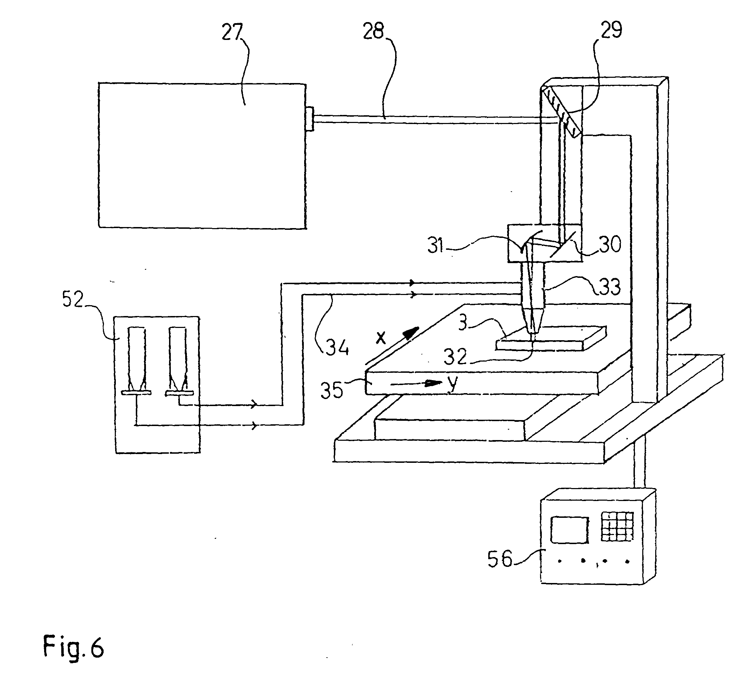

La figure 6 illustre schématiquement un tel dispositif qui peut être utilisé selon l'invention. Ce dispositif comprend un laser 27 de puissance qui délivre un faisceau 28 de lumière cohérente et monochromatique. Le faisceau 28 se propage dans une seule direction, de façon homogène, et présente une seule longueur d'onde. La divergence du faisceau est faible.

Un jeu de miroirs de renvoi 29 et 30 permet de transporter le faisceau jusque sur une tête de focalisation 31. La tête de focalisation 31 renvoie le faisceau laser sur la surface à recharger du couteau d'écorçage 3. La tête de focalisation 31 est adaptée pour focaliser le faisceau laser, de façon que celui-ci frappe le couteau d'écorçage 3 selon une zone d'impact 32 de faible surface, par exemple une surface présentant un diamètre compris entre 0,5 et 5 mm environ.

Un distributeur de poudre 52 sert de réservoir contenant une poudre de matériau destinée à former le rechargement sur la plaque formant le substrat du couteau d'écorçage 3. Cette poudre contient des grains de matière dure antiabrasion destinés à conserver leur état solide sous le faisceau laser, et des grains d'alliage de brasage destinés à fondre sous le faisceau laser. Le distributeur de poudre 52 est adapté pour fluidifier la poudre à l'aide d'un gaz neutre tel que l'argon ou l'hélium, et pour la transporter pneumatiquement vers une buse de projection 33 par des canalisations 34 d'amenée de poudre. La buse de projection 33 est adaptée pour mettre en forme le jet de poudre fluidifié en sortie de buse autour du faisceau laser, et pour produire un jet de poudre périphérique non divergent venant frapper la même zone d'impact 32 du couteau d'écorçage 3. Ainsi, le jet de poudre et le faisceau laser sont coaxiaux.

Le faisceau laser est orienté pour être proche de la verticale de la surface de couteau d'écorçage 3 à recharger. L'orifice de sortie de buse 33 est maintenu à une distance appropriée de la surface à recharger, par exemple environ 10 mm.

Le couteau d'écorçage 3 est placé sur une table 35 qui est déplacée dans le plan horizontal selon deux directions X et Y par des moyens d'entraînement pilotés par une commande numérique 56. Par ce déplacement, la zone d'impact 32 du faisceau laser et de la poudre sortant de la buse de projection 33 est déplacée progressivement sur la surface du couteau d'écorçage 3 à recharger, le long des arêtes d'écorçage.

L'énergie transportée par le faisceau laser 28 permet la fusion de la poudre d'alliage de brasage. La poudre arrive ainsi partiellement fondue sur la surface du couteau d'écorçage 3 à recharger, et assure le brasage des grains de carbure de tungstène sur le substrat.

On peut utiliser un laser CO₂ associé à une table manipulatrice commandée suivant deux ou trois axes par une commande numérique programmable.

La soudure par brasage est obtenue instantanément. La parfaite focalisation du faisceau laser permet de contrôler parfaitement la régularité de la couche déposée. La précision des déplacements de la table manipulatrice permet d'obtenir une épaisseur bien contrôlée et une grande homogénéité du rechargement.

La présente invention n'est pas limitée aux modes de réalisation qui ont été explicitement décrits, mais elle en inclut les diverses variantes et généralisations contenues dans le domaine des revendications ci-après.

## Revendications

1. Couteau d'écorçage (3), pour l'écorçage de troncs d'arbre (1), comprenant au moins une arête d'écorçage (6) limitée par une face d'attaque (7) et une face de fuite (8), avec une plaque de substrat (14) dont une face forme la face de fuite (8), **caractérisé en ce que** la face d'attaque (7) est renforcée par un rechargement antiabrasion (16) directement déposé sur le substrat et présentant des qualités antiabrasion supérieures à celles du matériau formant la plaque de substrat (14), et **en ce que** l'arête d'écorçage (6) est aigüe.

2. Couteau d'écorçage selon la revendication 1, **caractérisé en ce que** le rechargement antiabrasion (16) présente une épaisseur régulière comprise entre 0,2 et 1 mm environ.

3. Couteau d'écorçage selon l'une des revendications 1 ou 2, **caractérisé en ce que** le rechargement antiabrasion (16) comprend un mélange de grains de carbure de tungstène fondu liés par un alliage métallique.

4. Couteau d'écorçage selon la revendication 3, **caractérisé en ce que** les grains de carbure de tungstène fondu ont une granulométrie comprise entre 40 et 160 microns.

5. Couteau d'écorçage selon l'une des revendications 3 ou 4, **caractérisé en ce que** l'alliage métallique est un alliage Ni/Cr/B/Si de dureté comprise entre 40 HRC et 60 HRC.

6. Couteau d'écorçage selon l'une quelconque des revendications 1 à 5, **caractérisé en ce que** la plaque de substrat (14) est en acier.

7. Couteau d'écorçage selon l'une quelconque des revendications 1 à 6, **caractérisé en ce que** la plaque de substrat (14) est limitée par trois ou quatre arêtes d'écorçage (6, 15, 17, 18) formant un contour polygonal.

8. Machine d'écorçage, comprenant des moyens supports de troncs d'arbre (1) pour porter un tronc d'arbre (1) couché et le déplacer en translation longitudinale en le faisant tourner autour de son axe longitudinal, et des moyens (4) pour tenir au moins un couteau d'écorçage (3) selon l'une quelconque des revendications 1 à 7 avec son arête d'écorçage (6) en appui radial contre la face latérale (5) du tronc d'arbre (1) selon une orientation (9) appropriée.

9. Procédé de fabrication d'un couteau d'écorçage (3) ayant au moins une arête aigüe d'écorçage (6) limitée par une face d'attaque (7) et une face de fuite (8) et ayant une plaque de substrat (14) dont une face forme la face de fuite (8) selon l'une quelconque des revendications 1 à 7, comprenant une étape de rechargement de la face d'attaque (7) au moyen d'un dispositif comportant une buse de projection de poudre (33) à faisceau laser (28) coaxial central, dirigeant une poudre de matériau de rechargement et le faisceau laser (28) sur une zone d'impact (32) de la plaque de substrat (14), et déplaçant progressivement la zone d'impact (32) pour couvrir la zone d'arête d'écorçage (6) à recharger, le faisceau laser (28) ayant une intensité appropriée pour fondre en partie le matériau de rechargement et assurer son adhésion sur la plaque de substrat (14).

## Patentansprüche

1. Schälmesser (3) zum schälen von Baumstämmen (1) mit mindestens einer von einer Angriffsfläche (7) und einer Fluchtfläche (8) begrenzten Schälkante (6), mit einer Trägerplatte (14), von der eine Fläche die Fluchtfläche (8) bildet,
**dadurch gekennzeichnet,**
**daß** die Angriffsfläche (7) durch eine unmittelbar auf dem Träger angeordnete Antiabrieb-Auflage (16) verstärkt ist, der bessere Antiabriebeigenschaften aufweist als diejenigen des die Trägerplatte (14) bildenden Materials, und daß die Kante (6) scharf ist.

2. Schälmesser nach Anspruch 1, **dadurch gekennzeichnet, daß** die Antiabrieb-Auflage (16) eine gleichmäßige Dicke von zwischen etwa 0,2 und 1 mm aufweist.

3. Schälmesser nach einem der Ansprüche 1 oder 2, **dadurch gekennzeichnet, daß** die Antiabrieb-Auflage (16) eine Mischung von mit einer Metallegierung verbundenen Körnern aus geschmolzenem Wolframcarbid enthält.

4. Schälmesser nach Anspruch 3, **dadurch gekennzeichnet, daß** die Körner aus geschmolzenem Wolframcarbid eine Korngröße von zwischen 40 und 160 Mikrometern aufweisen.

5. Schälmesser nach einem der Ansprüche 3 oder 4, **dadurch gekennzeichnet, daß** die Metallegierung eine Mi/Cr/B/Si-Legierung mit einer Härte von zwischen 40 HRC und 60 HRC ist.

6. Schälmesser nach einem der Ansprüche 1 bis 5, **dadurch gekennzeichnet, daß** die Trägerplatte (14) aus Stahl ist.

7. Schälmesser nach einem der Ansprüche 1 bis 6, **dadurch gekennzeichnet, daß** die Trägerplatte (14) durch drei oder vier Schälkanten (6, 15, 17, 18) begrenzt ist, welche einen polygonalen Umriß bilden.

8. Schälmaschine mit Stützmitteln für Baumstämme (1) zum Tragen eines abgelegten Baumstammes (1) und Verschieben desselben in einer Längsbewegung und dabei Versetzen desselben in eine Drehbewegung um seine Längsachse, und Mitteln (4) zum Halten mindestens eines Schälmessers (3) nach einem der Ansprüche 1 bis 7 mit seiner Schälkante (6) in radialer Lagerung gegen eine Seitenfläche (5) des Baumstammes (1) entsprechend einer geeigneten Ausrichtung (9).

9. Verfahren zum Herstellen eines Schälmessers (3) mit mindestens einer durch eine Angriffsfläche (7) und eine Fluchtfläche (8) begrenzten und eine Trägerplatte (14), von der eine Fläche die Fluchtfläche (8) bildet, aufweisenden, scharfen Schälkante (6) nach einem der Ansprüche 1 bis 7, mit einem Schritt des Aufbringens einer Auflage auf die Angriffsfläche (7) mittels einer eine Pulvereinblasdüse (33) zum mittigen und koaxialen Einblasen von Pulver in einen Laserstrahl (28) aufweisenden Vorrichtung, Lenkens eines Pulvers eines Auflagenmaterials und des Laserstrahls (28) auf eine Auftreffzone (32) der Trägerplatte (14), und stufenweisen Verschiebens der Auftreffzone (32), um die mit der Auflage zu versehende Zone der Schälkante (6) abzudecken, wobei der Laserstrahl (28) eine für ein teilweises Schmelzen des Materials für die Auflage und zum Sicherstellen von dessen Anhaften auf der Trägerplatte (14) geeignete Intensität hat.

## Claims

1. Debarking knife (3), for debarking tree-trunks (1), comprising at least one debarking edge (6) delimited by a leading face (7) and a trailing face (8), one face of a substrate plate (14) forming said trailing face (8), **characterised in that** said leading face (7) is reinforced by an anti-abrasion hard surface coating (16), directly set on the substrate, and having better anti-abrasion qualities than the material of said substrate plate (14), and **in that** said debarking edge (6) is sharp.

2. Debarking knife according to claim 1, **characterised in that** said anti-abrasion hard surface coating (16) has a regular thickness between about 0.2 mm and 1 mm.

3. Debarking knife according to any one of claims 1 or 2, **characterised in that** said anti-abrasion hard surface coating (16) comprises a mixture of grains of fused tungsten carbide bound by a metal alloy.

4. Debarking knife according to claim 3, **characterised in that** said grains of fused tungsten carbide have a particle size range between 40 microns and 160 microns.

5. Debarking knife according to any one of claims 3 or 4, **characterised in that** said metal alloy is an Ni/Cr/B/Si alloy having a hardness between 40 HRC and 60 HRC.

6. Debarking knife according to any one of claims 1 to 5, **characterised in that** said substrate plate (14) is made of steel.

7. Debarking knife according to any one of claims 1 to 6, **characterised in that** said substrate plate (14) is delimited by three or four debarking edges (6, 15, 17, 18) forming a polygonal contour.

8. Debarking machine, comprising tree-trunk (1) support means for carrying a tree-trunk (1) on its side, moving it in longitudinal translation and rotating it about its longitudinal axis, and means (4) for holding at least one debarking knife (3) according to any one of claims 1 to 7 with its debarking edge (6) pressed radially against the lateral face (5) of the tree-trunk (1) in an appropriate orientation (9).

9. Method of manufacturing a debarking knife (3) having at least one sharp debarking edge (6) delimited by a leading face (7) and a trailing face (8), one face of a substrate plate (14) forming the trailing face (8), according to any one of claims 1 to 7, including a step of hard surface coating said leading face (7) by means of a device including a powder spray nozzle (33) with central coaxial laser beam (28), adapted to direct a hard surface coating material powder and said laser beam (28) onto an impact area (32) of said substrate plate (14), and progressively moving said impact area (32) to cover the debarking edge (6) area to be hard surface coated, said laser beam (28) having an appropriate intensity to melt said hard surface coating material partially and to cause it to adhere to said substrate plate (14).
